# EUROPÄISCHE PATENTSCHRIFT

(11) **EP 3 875 294 B1**
(45) Veröffentlichungstag und Bekanntmachung des Hinweises auf die Patenterteilung: **08.01.2025**
(21) Anmeldenummer: 21154538.9
(22) Anmeldetag: 01.02.2021
(51) Int. Cl.: B60H 1/22, F28D 1/04, F28F 1/16

(54) **VERFAHREN ZUR HERSTELLUNG EINES METALLGUSS-WÄRMETAUSCHERGEHÄUSES FÜR EIN FAHRZEUGHEIZGERÄT**
METHOD FOR PRODUCING A CAST METAL HEAT EXCHANGER HOUSING FOR A VEHICLE HEATING DEVICE
PROCÉDÉ DE FABRICATION D'UN BOITIER D'ÉCHANGEUR DE CHALEUR MÉTALLIQUE COULÉ POUR CHAUFFAGE DE VÉHICULE

(30) Priorität: 05.03.2020 DE 102020105941
(43) Veröffentlichungstag der Anmeldung: 08.09.2021
(73) Patentinhaber: Eberspächer Climate Control Systems GmbH, 73730 Esslingen (DE)
(72) Erfinder: Collmer, Andreas, 73773 Aichwald (DE)
(74) Vertreter: Ruttensperger Lachnit Trossin Gomoll

(56) Entgegenhaltungen:
- EP-A1- 3 091 306
- EP-A1- 3 346 219
- EP-A1- 3 611 432
- DE-A1- 19 926 264
- DE-C1- 19 734 814

## Beschreibung

Die vorliegende Erfindung betrifft ein Verfahren zur Herstellung eines Metallguss-Wärmetauschergehäuses für ein Fahrzeugheizgerät.

Ein derartiges Metallguss-Wärmetauschergehäuse umfasst eine in Richtung einer Gehäuselängsachse langgestreckte topfartige Gehäusewandung. Um an der Außenseite der Gehäusewandung Wärme auf ein diese umströmendes Medium, zum Beispiel die in ein Fahrzeug einzuleitende Luft, übertragen zu können, sind an der Außenseite des Wärmetauschergehäuses Wärmeübertragungsrippen vorgesehen, welche sich sowohl im Bereich einer Umfangswandung der topfartigen Gehäusewandung, als auch im Bereich einer beispielsweise kugelsegmentartig ausgebildeten Bodenwandung der Gehäusewandung erstrecken.

Aus der DE 199 26 264 A1 ist ein mit einem Verfahren gemäß dem Oberbegriff des Anspruchs 1 mit einem stabartigen Anguss hergestelltes Wärmetauschergehäuse bekannt, welches eine in Richtung einer Gehäuselängsachse langgestreckte, topfartige Gehäusewandung mit einer kalottenartigen Bodenwandung aufweist. An einer Außenseite der Gehäusewandung sind in Richtung der Gehäuselängsachse sich erstreckende Rippen in sternförmiger Struktur angeordnet. Im Bereich der Bodenwandung sind die Rippen an einem stabartigen Anguss miteinander verbunden.

Es ist die Aufgabe der vorliegenden Erfindung, ein Verfahren zur Herstellung eines Metallguss-Wärmetauschergehäuses für ein Fahrzeugheizgerät vorzusehen, mit welchem ein Metallguss-Arbeitsvorgangs zur Herstellung eines strömungstechnisch vorteilhaften Wärmetauschergehäuses schnell und präzise durchgeführt werden kann.

Erfindungsgemäß wird diese Aufgabe gelöst durch ein Verfahren gemäß Anspruch 1 zur Herstellung eines Metallguss-Wärmetauschergehäuses für ein Fahrzeugheizgerät mit einer in Richtung einer Gehäuselängsachse langgestreckten topfartigen Gehäusewandung und einer Mehrzahl von an einer Außenseite der Gehäusewandung im Bereich einer Umfangswandung und im Bereich einer Bodenwandung der Gehäusewandung in Richtung der Gehäuselängsachse verlaufenden Wärmeübertragungsrippen. Bei diesem Verfahren umfasst eine Anguss-Querschnittsfläche wenigstens einen Teil der Wärmeübertragungsrippen. Nach Durchführung eines Metallguss-Arbeitsvorgangs und Abkühlen des Metallmaterials wird ein Anguss derart von dem Wärmetauschergehäuse abgetrennt, dass eine zur Gehäuselängsachse im Wesentlichen orthogonale und sich in den Bereich wenigstens eines Teils der Wärmeübertragungsrippen erstreckende axiale Stirnfläche des Wärmetauschergehäuses gebildet wird.

Die Anguss-Querschnittsfläche ist diejenige Querschnittsfläche einer in einer Gussform vorgesehenen Öffnung, durch welche das flüssige Metallmaterial in die zur Herstellung des Wärmetauschergehäuses eingesetzte Gussform eingegossen wird.

Um das heiße, flüssige Metallmaterial möglichst schnell in die Form eingießen zu können und damit alle Formhohlräume vollständig und gleichmäßig mit dem flüssigen Metallmaterial füllen zu können, ist es erforderlich, eine ausreichend große Anguss-Querschnittsfläche bereitzustellen. Dadurch, dass gemäß den Prinzipien der vorliegenden Erfindung diese Anguss-Querschnittsfläche sich bis in den Bereich der Wärmeübertragungsrippen erstreckt, kann auch zumindest ein Teil der Wärmeübertragungsrippen-Querschnittsfläche zum Einleiten von flüssigem Metallmaterial genutzt werden.

Um eine ausreichend große Anguss-Querschnittsfläche bereitstellen zu können, wird weiter vorgeschlagen, dass die Anguss-Querschnittsfläche einen zentralen Anguss-Kanal und, ausgehend von dem zentralen Anguss-Kanal, eine Mehrzahl von Diagonalrippen umfasst. Da gemäß den Prinzipien der vorliegenden Erfindung die Anguss-Querschnittsfläche auch Teile der Wärmeübertragungsrippen umfasst bzw. sich in den Bereich der Wärmeübertragungsrippen erstreckt, kann ein im Bereich des zentralen Anguss-Kanals bereitzustellender Teil der Anguss-Querschnittsfläche bzw. ein im Bereich der Diagonalrippen bereitzustellender Teil der Querschnittsfläche verringert werden.

Beispielsweise kann vorgesehen sein, dass, ausgehend von dem zentralen Anguss-Kanal, sich vier Diagonalrippen erstrecken. Dabei können jeweils zwei Diagonalrippen sich zueinander diametral von dem zentralen Anguss-Kanal weg erstrecken oder/und einander in Umfangsrichtung unmittelbar benachbarte Diagonalrippen zueinander im Wesentlichen orthogonal angeordnet sein.

Um eine Verknüpfung der verschiedenen die gesamte Anguss-Querschnittsfläche bereitstellenden Querschnittsflächenanteile zu erreichen, kann im Bereich der Anguss-Querschnittsfläche wenigstens ein Teil der Wärmeübertragungsrippen sich ausgehend vom zentralen Anguss-Kanal erstrecken, oder/und kann im Bereich der Anguss-Querschnittsfläche wenigstens ein Teil der Wärmeübertragungsrippen sich ausgehend von den Diagonalrippen erstrecken.

Um eine große Oberfläche für die Übertragung von Wärme auf ein das Wärmetauschergehäuse umströmendes Medium bereit stellen zu können, wird vorgeschlagen, dass die Wärmeübertragungsrippen in mehreren Gruppen von Wärmeübertragungsrippen angeordnet sind, wobei die Wärmeübertragungsrippen jeder Gruppe von Wärmeübertragungsrippen zueinander im Wesentlichen parallel angeordnet sind.

Erfindungsgemäß kann vorgesehen sein, dass beim Abtrennen des Angusses die axiale Stirnfläche sich in die Diagonalrippen erstreckend gebildet wird.

Beim Abtrennen des Angusses kann die axiale Stirnfläche gebildet werden mit einem Stirnflächenbereich eines Zentral-Ansatzes oder/und mit Stirnflächenbereichen der Diagonalrippen.

Ferner kann beim Abtrennen des Angusses die axiale Stirnfläche mit in die Wärmeübertragungsrippen der Gruppen von zueinander im Wesentlichen parallel sich erstreckenden Wärmeübertragungsrippen sich erstreckenden Stirnflächen gebildet werden.

Ein mit einem erfindungsgemäßen Verfahren hergestelltes Metallguss-Wärmetauschergehäuse umfasst eine in Richtung einer Gehäuselängsachse langgestreckte topfartige Gehäusewandung und eine Mehrzahl von an einer Außenseite der Gehäusewandung im Bereich einer Umfangswandung und im Bereich einer
Bodenwandung der Gehäusewandung in Richtung der Gehäuselängsachse verlaufenden Wärmeübertragungsrippen, wobei eine durch Abtrennen von Metallmaterial gebildete, zur Gehäuselängsachse im Wesentlichen orthogonale axiale Stirnfläche des Wärmetauschergehäuses sich in den Bereich wenigstens eines Teils der Wärmeübertragungsrippen erstreckt.

Von einem sich zur Gehäuselängsachse im Wesentlichen koaxial von der Bodenwandung erstreckenden Zentral-Ansatz können Diagonalrippen nach radial außen verlaufen, und die durch Abtrennen von Metallmaterial gebildete axiale Stirnfläche kann sich in den Bereich der Diagonalrippen erstrecken.

Die vorliegende Erfindung wird nachfolgend mit Bezug auf die beiliegenden Figuren detailliert beschrieben. Es zeigt:

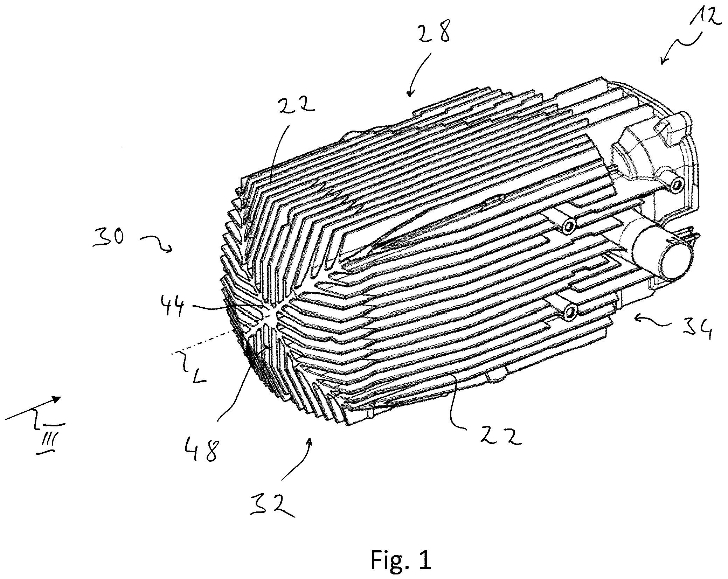

- Fig. 1: eine perspektivische Ansicht eines Metallguss-Wärmetauschergehäuses für ein brennstoffbetriebenes Fahrzeugheizgerät;
- Fig. 2: das Metallguss-Wärmetauschergehäuse der Fig. 1 mit einem bei einem Metallguss-Arbeitsvorgang gebildeten und von dem Wärmetauschergehäuse zu trennenden Anguss;
- Fig. 3: das Metallguss-Wärmetauschergehäuse der Fig. 1 in Blickrichtung III in Fig. 1;

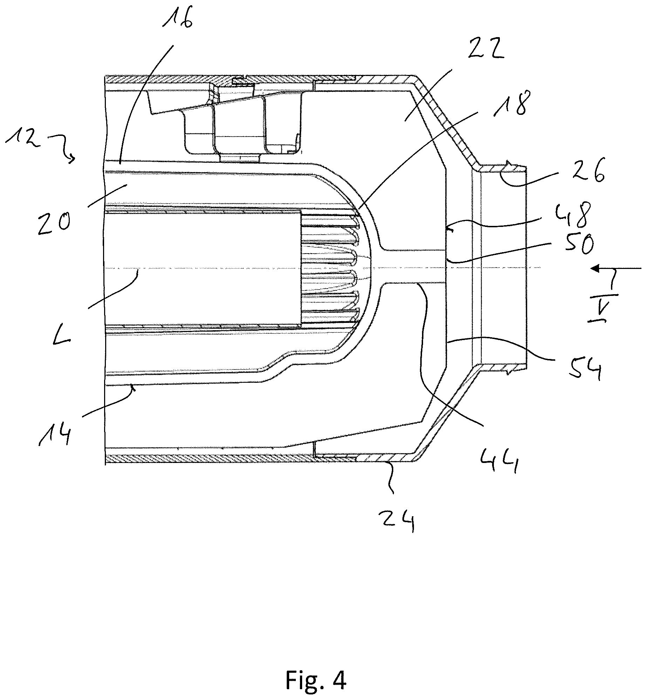

- Fig. 4: eine Teil-Längsschnittansicht des Wärmetauschergehäuses der Fig. 1 in einem Gehäuse eines Fahrzeugheizgeräts;

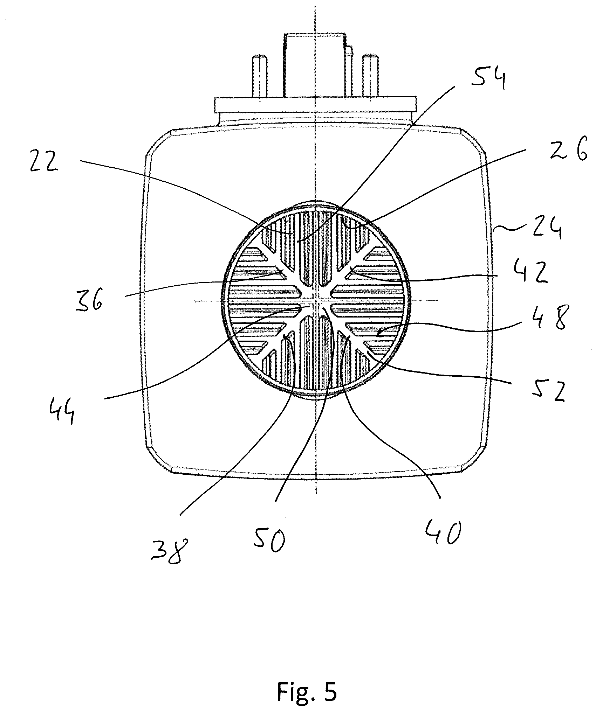

- Fig. 5: eine Axialansicht des in dem Gehäuse angeordneten Wärmetauschergehäuses in Blickrichtung V in Fig. 4.

Das in den Figuren dargestellte als Metallgussteil aufgebaute Wärmetauschergehäuse 12 ist mit einer topfartigen Gehäusewandung 14 aufgebaut. Die topfartige Gehäusewandung 14 umfasst eine in Richtung einer Gehäuselängsachse L langgestreckte Umfangswandung 16 und in einem axialen Endbereich eine kalottenartig bzw. kugelsegmentartig geformte Bodenwandung 18. An der Innenseite der Gehäusewandung 14 sind in Richtung der Gehäuselängsachse L verlaufende Wärmeübertragungsrippen 20 vorgesehen, welche Wärme von dem im Inneren des Wärmetauschergehäuses 12 strömenden Abgas aufnehmen. An der Außenseite der Gehäusewandung 14 sind weitere Wärmeübertragungsrippen 22 vorgesehen, über welche Wärme auf das das Wärmetauschergehäuse 12 umströmende Medium, also beispielsweise die in einen Fahrzeuginnenraum einzuleitende Luft, übertragen werden kann. Diese strömt im Inneren eines das Wärmetauschergehäuse 12 aufnehmenden und beispielsweise aus Kunststoffmaterial geformten Gehäuses 24 und verlässt dieses in einem anschließend an die Bodenwandung 18 des Wärmetauschergehäuses 12 gebildeten Auslass 26.

Die an der Außenseite des Wärmetauschergehäuses 12 bzw. der Gehäusewandung 14 vorgesehenen Wärmeübertragungsrippen 22 sind in insgesamt vier in Umfangsrichtung aufeinanderfolgenden Gruppen 28, 30, 32, 34 angeordnet. In jeder dieser Gruppen 28, 30, 32, 34 sind die diesen Gruppen 28, 30, 32, 34 zugeordneten Wärmeübertragungsrippen 22 entlang der Gehäuselängsachse L sich erstreckend und zueinander parallel verlaufend angeordnet. Die Wärmeübertragungsrippen 22 einander unmittelbar benachbarter Gruppen 28, 30, 32, 34 sind zueinander näherungsweise orthogonal angeordnet, um die Wärmeübertragungsrippen 22 einander diametral gegenüberliegender Gruppen sind zueinander im Wesentlichen parallel angeordnet.

Um diese Struktur zu erhalten, sind zumindest im Bereich der Außenseite der Bodenwandung 18 Diagonalrippen 36, 38, 40, 42 vorgesehen. Diese erstrecken sich in Richtung der Gehäuselängsachse L ausgehend von der Bodenwandung 18 axial und ausgehend von einem zur Gehäuselängsachse L im Wesentlichen konzentrischen und von der Bodenwandung 18 sich weg erstreckenden Zentral-Ansatz 44 nach radial außen. Einander unmittelbar benachbarte Diagonalrippen 36, 38, 40, 42 schließen einen Winkel von beispielsweise etwa 90° ein. Einander bezüglich der Gehäuselängsachse L diametral gegenüberliegende Diagonalrippen 36, 38, 40, 42 verlaufen zueinander im Wesentlichen parallel.

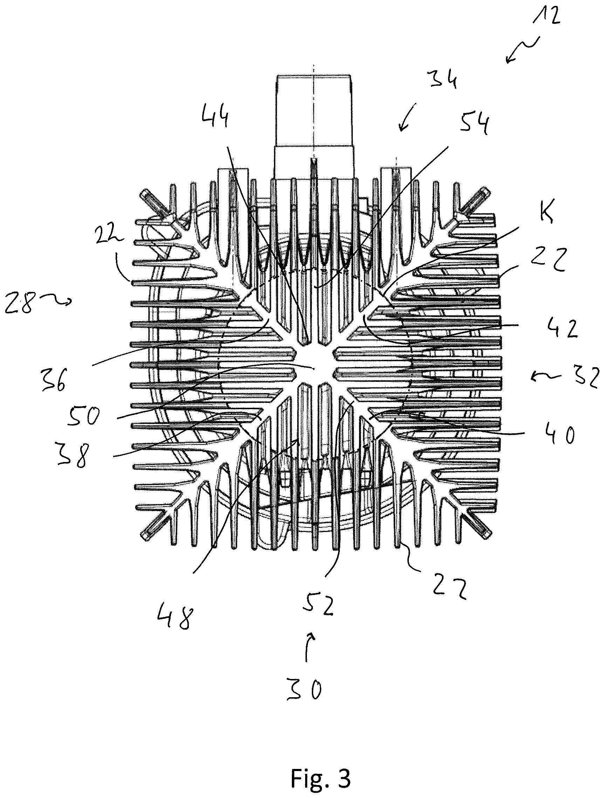

Die Fig. 3 zeigt deutlich, dass bei jeder der vier Gruppen von Wärmeübertragungsrippen 28, 30, 32, 34 ein Teil der Wärmeübertragungsrippen 22 sich ausgehend von den Diagonalrippen 36, 38, 40, 42 erstreckt. Ein Teil der Wärmeübertragungsrippen 22, insbesondere eine jeweils zentrale Wärmeübertragungsrippe jeder Gruppe 28, 30, 32, 34, erstreckt sich ausgehend von dem Zentral-Ansatz 44.

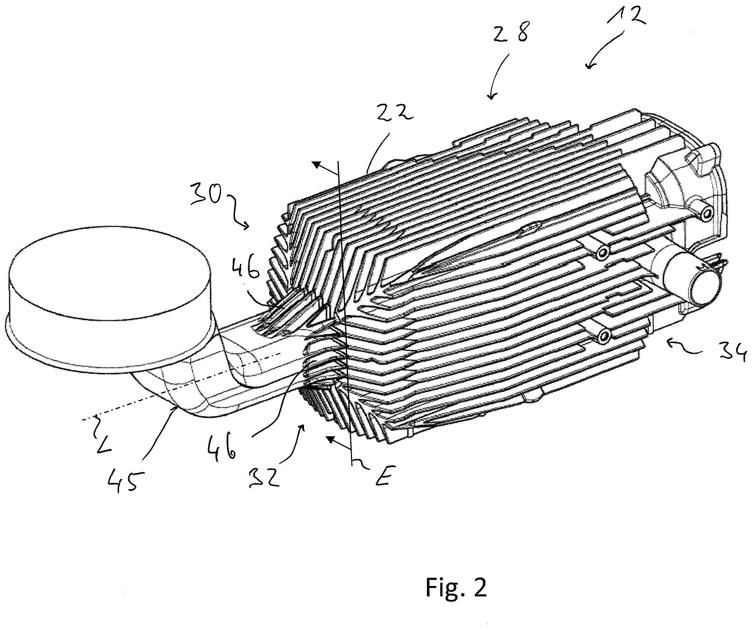

Das Wärmetauschergehäuse 12 wird als Metallguss-Bauteil in einem Metallguss-Arbeitsvorgang unter Verwendung einer Gussform hergestellt. Um das heiße, flüssige Metallmaterial in die Gussform einfüllen zu können, ist in einem der Bodenwandung 18 nahe liegenden bzw. gegenüberliegenden Bereich einer Gussform eine Angussöffnung mit einer Anguss-Querschnittsfläche bereitgestellt. Diese Anguss-Querschnittsfläche muss eine bestimmte Mindestgröße aufweisen, um dafür Sorge tragen zu können, dass das heiße und flüssige Metallmaterial, im Allgemeinen verflüssigtes Aluminium oder eine Aluminiumlegierung, schnell in die Gussform eingefüllt und darin vollständig verteilt werden kann, so dass keine Hohlräume verbleiben. Nach dem Auskühlen des eingefüllten Metallmaterials verbleibt ein in Fig. 2 dargestellter Rohling, welcher einerseits das Wärmetauschergehäuse 12 und andererseits einen allgemein mit 45 bezeichneten Anguss umfasst.

Bei dem erfindungsgemäßen Verfahren ist dafür gesorgt, dass die Anguss-Querschnittsfläche sich bis in den Bereich der bzw. einiger Wärmeübertragungsrippen 22 erstreckt. Dadurch weist der Anguss 45 den Wärmeübertragungsrippen 22 entsprechende bzw. an diese anschließende Rippenabschnitte 46 auf. Um diese Struktur zu erhalten, kann der in der Gussform gebildete Kanal bzw. die in der Gussform gebildete Öffnung zum Eingießen des Metallmaterials mit in Richtung zu dem das flüssige Metallmaterial aufnehmenden und im Wesentlichen ein Negativ des Wärmetauschergehäuses 12 darstellenden Hohlraum der Gussform sich erweiternden Öffnungsquerschnitt ausgebildet sein.

Nach dem Auskühlen des Metallmaterials wird der Anguss 45 durch einen Schneidevorgang, beispielsweise durch Absägen, von dem Wärmetauschergehäuse 12 getrennt, so dass eine in Fig. 3 von einem in Strich-Punkt-Linie eingezeichneten Kreis K umrissene axiale Stirnfläche 48 des Wärmetauschergehäuses 12 verbleibt. Dazu wird der Anguss 45 in einer zur Gehäuselängsachse L im Wesentlichen Orthogonale Ebene E abgetrennt, wie in Fig. 2 veranschaulicht. Diese zur Gehäuselängsachse L näherungsweise orthogonale axiale Stirnfläche 48 umfasst einerseits einen Stirnflächenbereich 50 des Zentral-Ansatzes 44 und umfasst andererseits Stirnflächenbereiche 52 der Diagonalrippen 36, 38, 40, 42 sowie auch Stirnflächen 54 der an der Außenseite des Wärmetauschergehäuses 12 vorgesehenen Wärmeübertragungsrippen 22. Diese axiale Stirnfläche 48 entspricht im Wesentlichen auch der in einer Gussform vorgesehenen Anguss-Querschnittsfläche, welche beispielsweise auch die maximale Querschnittsfläche der das Metallmaterial in den Hohlraum der Gussform leitenden Öffnung in der Gussform sein kann.

Da bei dem erfindungsgemäß durchzuführenden Verfahren die Anguss-Querschnittsfläche sich bis in den Bereich der Wärmeübertragungsrippen 22 erstreckt, kann eine vergleichsweise große Gesamt-Querschnittsfläche zum Einfüllen des flüssigen Metallmaterials bereitgestellt werden, ohne dass der Zentral-Ansatz 44 bzw. ein zum Bilden des Zentral-Ansatzes 44 vorzusehender zentraler Anguss-Kanal mit übermäßig großem Querschnitt bereitgestellt werden muss, und ohne dass die Diagonalrippen 36, 38, 40, 42 mit übermäßig großem Querschnitt bereitgestellt werden müssen. Es wird somit eine vergleichsweise filigrane Struktur erhalten, welche dem an der Außenseite des Wärmetauschergehäuses 12 strömenden Medium nur einen geringen Strömungswiderstand entgegensetzt. Insbesondere wird im Bereich des Auslasses 26 aufgrund eines vergleichsweise geringen Querschnitts des Zentral-Ansatzes 44 und einer vergleichsweise geringen Querschnittsfläche der Diagonalrippen 36, 38, 40, 42 eine große Querschnittsfläche zum Durchströmen für das zu erwärmende Medium gewährleistet. Gleichzeitig wird eine auf die in Fig. 3 erkennbare axiale Stirnfläche 48 verteilte gleichmäßige Einleitung des heißen, flüssigen Metallmaterials in die Gussform gewährleistet, so dass auch das Metallmaterial im Inneren der Gussform gleichmäßiger und schneller verteilt werden kann.

## Patentansprüche

1. Verfahren zur Herstellung eines Metallguss-Wärmetauschergehäuses (12) für ein Fahrzeugheizgerät mit einer in Richtung einer Gehäuselängsachse (L) langgestreckten topfartigen Gehäusewandung (14) und einer Mehrzahl von an einer Außenseite der Gehäusewandung (14) im Bereich einer Umfangswandung (16) und im Bereich einer Bodenwandung (18) der Gehäusewandung (14) in Richtung der Gehäuselängsachse (L) verlaufenden Wärmeübertragungsrippen (22), welches Verfahren die Schritte umfasst:
- in einem Metallguss-Arbeitsvorgang, Einfüllen von flüssigem Metallmaterial in eine Gussform durch eine in einer Gussform in einem der Bodenwandung nahe liegenden Bereich vorgesehene Angussöffnung mit einer Anguss-Querschnittsfläche,
- nach Durchführung des Metallguss-Arbeitsvorgangs, Abkühlen des Metallmaterials
- nach dem Abkühlen des Metallmaterials, Abtrennen eines Angusses (45) von dem Wärmetauschergehäuse (12) derart, dass eine der Anguss-Querschnittsfläche entsprechende, zur Gehäuselängsachse (L) im Wesentlichen orthogonale axiale Stirnfläche (48) des Wärmetauschergehäuses (12) gebildet wird,
**dadurch gekennzeichnet, dass** die Anguss-Querschnittsfläche wenigstens einen Teil der Wärmeübertragungsrippen (22) umfasst, und dass die der Anguss-Querschnittsfläche entsprechende, zur Gehäuselängsachse (L) im Wesentlichen orthogonale axiale Stirnfläche (48) des Wärmetauschergehäuses (12) sich in den Bereich wenigstens eines Teils der Wärmeübertragungsrippen (22) erstreckt.

2. Verfahren nach Anspruch 1, **dadurch gekennzeichnet, dass** die Anguss-Querschnittsfläche einen zentralen Anguss-Kanal und, ausgehend von dem zentralen Anguss-Kanal, eine Mehrzahl von Diagonalrippen (36, 38, 40, 42) umfasst.

3. Verfahren nach Anspruch 2, **dadurch gekennzeichnet, dass**, ausgehend von dem zentralen Anguss-Kanal sich vier Diagonalrippen (36, 38, 40, 42) erstrecken, vorzugsweise wobei jeweils zwei Diagonalrippen (36, 38, 40, 42) sich zueinander diametral von dem zentralen Anguss-Kanal weg erstrecken oder/und einander in Umfangsrichtung unmittelbar benachbarte Diagonalrippen (36, 38, 40, 42) zueinander im Wesentlichen orthogonal angeordnet sind.

4. Verfahren nach Anspruch 2 oder 3, **dadurch gekennzeichnet, dass** im Bereich der Anguss-Querschnittsfläche wenigstens ein Teil der Wärmeübertragungsrippen (22) sich ausgehend vom zentralen Anguss-Kanal erstreckt, oder/und dass im Bereich der Anguss-Querschnittsfläche wenigstens ein Teil der Wärmeübertragungsrippen (22) sich ausgehend von den Diagonalrippen (36, 38, 40, 42) erstreckt.

5. Verfahren nach einem der vorangehenden Ansprüche, **dadurch gekennzeichnet, dass** die Wärmeübertragungsrippen (22) in mehreren Gruppen (28, 30, 32, 34) von Wärmeübertragungsrippen (22) angeordnet sind, wobei die Wärmeübertragungsrippen (22) jeder Gruppe (28, 30, 32, 34) von Wärmeübertragungsrippen (22) zueinander im Wesentlichen parallel angeordnet sind.

6. Verfahren nach Anspruch 2, oder nach einem der Ansprüche 3-5, sofern auf Anspruch 2 rückbezogen, **dadurch gekennzeichnet, dass** beim Abtrennen des Angusses (45) die axiale Stirnfläche (48) sich in die Diagonalrippen (36, 38, 40, 42) erstreckend gebildet wird.

7. Verfahren nach Anspruch 6, **dadurch gekennzeichnet, dass** beim Abtrennen des Angusses (45) die axiale Stirnfläche (48) gebildet wird mit einem Stirnflächenbereich (50) eines Zentral-Ansatzes (44) oder/und mit Stirnflächenbereichen (52) der Diagonalrippen (36, 38, 40, 42).

8. Verfahren nach Anspruch 5 und Anspruch 6 oder 7, **dadurch gekennzeichnet, dass** beim Abtrennen des Angusses (45) die axiale Stirnfläche (48) mit in die Wärmeübertragungsrippen (22) der Gruppen (28, 30, 32, 34) von zueinander im Wesentlichen parallel sich erstreckenden Wärmeübertragungsrippen (22) sich erstreckenden Stirnflächen (54) gebildet wird.

## Claims

1. Process for manufacturing a cast metal heat exchanger housing (12) for a vehicle heater with a pot-like housing wall (14) elongated in the direction of a housing longitudinal axis (L) and with a plurality of heat transfer ribs (22) extending in the direction of the housing longitudinal axis (L) on an outer side of the housing wall (14) in the area of a circumferential wall (16) and in the area of a bottom wall (18) of the housing wall (14), the process comprising the following steps:
- in a metal casting operation filling liquid metal material into a casting mould via a sprue opening with a sprue cross-sectional area provided in a casting mould in an area near the bottom wall,
- after carrying out the metal casting operation, cooling the metal material,
- after cooling the metal material, cutting off a sprue (45) from the heat exchanger housing in such a way that that an axial end face (48) of the heat exchanger housing (12) corresponding to the sprue cross-sectional area and essentially at right angles to the housing longitudinal axis (L) is formed,
**characterized in that** the sprue cross-sectional area comprises at least part of the heat transfer ribs (22) and **in that** the axial end face (48) of the heat exchanger housing (12) corresponding to the sprue cross-sectional area and essentially at right angles to the housing longitudinal axis (L) extends at least into the area of part of the heat transfer ribs (22).

2. Process in accordance with claim 1, **characterized in that** the sprue cross-sectional area comprises a central runner and, starting from the central runner, a plurality of diagonal ribs (36, 38, 40, 42).

3. Process in accordance with claim 2, **characterized in that**, starting from the central runner, four diagonal ribs (36, 38, 40, 42) extend, preferably wherein two respective diagonal ribs (36, 38, 40, 42) extend diametrically in relation to one another away from the central runner or/and diagonal ribs (36, 38, 40, 42) arranged directly adjacent to one another in the circumferential direction are arranged essentially at right angles to one another.

4. Process in accordance with claim 2 or 3, **characterized in that** at least some of the heat transfer ribs (22) extend starting from the central runner in the area of the sprue cross-sectional area, or/and that in the area of the sprue cross-sectional area at least some of the heat transfer ribs (22) extend starting from the diagonal ribs (36, 38, 40, 42).

5. Process in accordance with one of the above claims, **characterized in that** the heat transfer ribs (22) are arranged in a plurality of groups (28, 30, 32, 34) of heat transfer ribs (22), wherein the heat transfer ribs (22) of each group (28, 30, 32, 34) of heat transfer ribs (22) are arranged essentially parallel to one another.

6. Process in accordance with claim 2 or one of claims 3-5, if referring back to claim 2, **characterized in that** on cutting off of the sprue (45), the axial end face (48) is formed such that it extends into the diagonal ribs (36, 38, 40, 42).

7. Process in accordance with claim 6, **characterized in that** on cutting off the sprue (45), the axial end face (48) is formed with an end face area (50) of a central attachment (44) or/and with end face areas (52) of the diagonal ribs (36, 38, 40, 42).

8. Process in accordance with claim 5 and claim 6 or 7, **characterized in that** on cutting off the sprue (45), the axial end face (48) is formed with end faces (54) extending into the heat transfer ribs (22) of the groups (28, 30, 32, 34) of heat transfer ribs (22) extending essentially parallel in relation to one another.

## Revendications

1. Procédé de fabrication d'un boîtier d'échangeur de chaleur en métal coulé (12) pour un chauffage de véhicule avec une paroi de boîtier en forme de pot (14) allongée dans la direction de l'axe longitudinal du boîtier (L) et avec une pluralité de nervures de transfert de chaleur (22) s'étendant dans la direction de l'axe longitudinal du boîtier (L) sur un côté extérieur de la paroi de boîtier (14) dans la zone d'une paroi circonférentielle (16) et dans la zone d'une paroi de fond (18) de la paroi de boîtier (14), le procédé comprenant les étapes suivantes :
- lors d'une opération de coulée de métal, remplissage d'un matériau métallique liquide dans un moule de coulée via une ouverture de carotte ayant une section de carotte prévue dans un moule de coulée dans une zone proche de la paroi de fond,
- après l'opération de coulée du métal, refroidissement du matériau métallique,
- après refroidissement du matériau métallique, découper une carotte (45) du boîtier de l'échangeur de chaleur de manière à former une face d'extrémité axiale (48) du boîtier d'échangeur de chaleur (12) correspondant à la section transversale de la carotte et essentiellement perpendiculaire à l'axe longitudinal du boîtier (L),
**caractérisé en ce que** la section transversale de la carotte comprend au moins une partie des nervures de transfert de chaleur (22) et **en ce que** la face d'extrémité axiale (48) du boîtier d'échangeur de chaleur (12) correspondant à la section transversale de la carotte et formant essentiellement un angle droit avec l'axe longitudinal du boîtier (L) s'étend au moins dans la zone d'une partie des nervures de transfert de chaleur (22).

2. Procédé selon la revendication 1, **caractérisé en ce que** la section transversale de la carotte comprend une glissière centrale et, à partir de la glissière centrale, une pluralité de nervures diagonales (36, 38, 40, 42).

3. Procédé selon la revendication 2, **caractérisé en ce que**, à partir de la glissière centrale, quatre nervures diagonales (36, 38, 40, 42) s'étendent, de préférence dans lequel deux nervures diagonales respectives (36, 38, 40, 42) s'étendent diamétralement l'une par rapport à l'autre en s'éloignant de la glissière centrale ou/et les nervures diagonales (36, 38, 40, 42) disposées directement l'une à côté de l'autre dans la direction circonférentielle sont disposées essentiellement orthogonalement l'une par rapport à l'autre.

4. Procédé selon la revendication 2 ou 3, **caractérisé en ce qu'**au moins certaines des nervures de transfert de chaleur (22) s'étendent à partir de la glissière centrale dans la zone de la section transversale de la carotte, ou/et **en ce que** dans la zone de la section transversale de la carotte, au moins certaines des nervures de transfert de chaleur (22) s'étendent à partir des nervures diagonales (36, 38, 40, 42).

5. Procédé selon l'une des revendications précédentes, **caractérisé en ce que** les nervures de transfert de chaleur (22) sont disposées en plusieurs groupes (28, 30, 32, 34) de nervures de transfert de chaleur (22), dans lequel les nervures de transfert de chaleur (22) de chaque groupe (28, 30, 32, 34) de nervures de transfert de chaleur (22) sont disposées essentiellement parallèlement les unes aux autres.

6. Procédé selon la revendication 2 ou l'une des revendications 3 à 5, si l'on se réfère à la revendication 2, **caractérisé en ce que**, lors du découpage de la carotte (45), la face d'extrémité axiale (48) est formée de telle sorte qu'elle s'étend dans les nervures diagonales (36, 38, 40, 42).

7. Procédé selon la revendication 6, **caractérisé en ce que** lors du découpage de la carotte (45), la face d'extrémité axiale (48) est formée avec une zone de face d'extrémité (50) d'une attache centrale (44) ou/et avec des zones de face d'extrémité (52) des nervures diagonales (36, 38, 40, 42).

8. Procédé selon la revendication 5 et la revendication 6 ou 7, **caractérisé en ce que**, lors du découpage de la carotte (45), la face d'extrémité axiale (48) est formée avec des faces d'extrémité (54) s'étendant dans les nervures de transfert de chaleur (22) des groupes (28, 30, 32, 34) de nervures de transfert de chaleur (22) s'étendant essentiellement parallèlement l'une par rapport à l'autre.
